# FASCICULE DE BREVET EUROPEEN

(11) **EP 4 127 371 B1**
(45) Date de publication et mention de la délivrance du brevet: **03.12.2025**
(21) Numéro de dépôt: 21716403.7
(22) Date de dépôt: 01.04.2021
(51) Int. Cl.: E06B 3/54, E04B 2/88, E06B 3/66, E06B 3/67

(54) **MODULE DE FAÇADE ET FAÇADE DE BÂTIMENT ASSOCIÉE**
FASSADENMODUL UND ZUGEHÖRIGE GEBÄUDEFASSADE
FACADE MODULE AND ASSOCIATED BUILDING FACADE

(30) Priorité: 03.04.2020 FR 2003374
(43) Date de publication de la demande: 08.02.2023
(73) Titulaire: MINERAL EXPERTISE, 75001 Paris (FR); AGC Glass Europe, 1348 Louvain-La-Neuve (BE)
(72) Inventeur: ORJEBIN, Pierre, 94300 VINCENNES (FR); WINKEL, Francois, 69330 MEYZIEU (FR); THERON, Richard, 38850 CHIRENS (FR)
(74) Mandataire: Lavoix
(86) Numéro de dépôt international: PCT/EP2021/058707
(87) Numéro de publication internationale: WO 2021/198468

(56) Documents cités:
- EP-A1- 2 444 579
- EP-B1- 1 972 748
- CN-U- 204 199 500
- DE-A1- 19 613 439

## Description

La présente invention concerne un module de façade destiné à séparer un intérieur d'un extérieur d'un volume de bâtiment, comprenant :
- une plaque de séparation, comprenant une face intérieure et une face extérieure, la plaque de séparation comprenant une couche vitrée intérieure formant la face intérieure, et
- un organe de fixation de la plaque de séparation adapté pour fixer la plaque de séparation à une structure de bâtiment.

L'invention s'applique aux modules de façade destinés à séparer un intérieur d'un extérieur d'un volume de bâtiment. L'invention s'applique plus particulièrement aux modules de façade destinés à séparer l'intérieur de l'extérieur d'un bâtiment.

Les bâtiments de grandes dimensions demandent des façades légères et esthétiques afin de séparer l'intérieur du bâtiment de l'extérieur du bâtiment.

A cet effet, il est connu d'utiliser des façades dites *façade rideau* ou *mur rideau.* De telles façades comportent une pluralité de modules de façade fixée à une structure du bâtiment.

Un module de façade est présenté dans le document DE 196 13 439 A1.

Les modules de façade comportent une plaque de séparation fixée à la structure du bâtiment par l'intermédiaire d'un organe de maintien. La plaque de séparation comprend par exemple une couche vitrée de superficie élevée, généralement supérieure à 1m² séparant l'intérieur de l'extérieur du bâtiment.

De tels modules de façade, notamment par l'utilisation d'une plaque de séparation comportant une couche vitrée de superficie élevée permettent d'obtenir une façade légère et esthétique.

Toutefois, de tels modules de façade ne donnent pas entière satisfaction. En effet, l'utilisation de plaques de séparation dans lesquelles une couche vitrée ne donne pas de grande liberté sur l'esthétique finale de la façade, les façades comprenant de tels modules de façades ayant toutes un aspect semblable.

Un but de l'invention est de proposer un module de façade offrant un choix élargi d'esthétiques pour une façade.

A cet effet, l'invention a pour objet un module de façade conforme à la revendication 1.

Une plaque de séparation comprenant une couche rocheuse formant la face extérieure de la plaque de séparation est particulièrement avantageuse puisqu'elle permet de former des façades d'aspects variés et esthétiques. Une telle plaque de séparation permet par ailleurs d'utiliser la roche comme un revêtement et non comme un élément structurel, réduisant ainsi le coût et le poids d'une façade formée à partir d'un tel module de façade.

Suivant d'autres aspects optionnels de l'invention, le module de façade est conforme aux revendications 2 à 6.

L'invention concerne par ailleurs une façade de bâtiment conforme à la revendication 7.

Suivant un aspect optionnel, la façade de bâtiment est conforme à la revendication 8.

L'invention sera mieux comprise à la lecture de la description qui va suivre, donnée uniquement à titre d'exemple non limitatif et faite en se référant aux dessins sur lesquels :
- la figure 1 est une vue en perspective d'une plaque de séparation d'un module de façade selon un mode de réalisation de l'invention ;
- la figure 2 est une vue en coupe selon un plan de coupe A-A' représenté sur la figure 1 d'une façade de bâtiment comprenant la plaque de séparation représentée sur la figure 1 ; et
- la figure 3 est une vue similaire à celle de la figure 2 d'une plaque de séparation selon un autre mode de réalisation.

Dans la description qui suit, on considère une base orthonormée directe (X, Y, Z).

La direction d'élévation Z est définie selon la hauteur du module de façade et correspond par exemple à la direction verticale d'un bâtiment. La direction traversante X correspond à la direction intérieur-extérieur par rapport au volume de bâtiment, la direction X étant sensiblement perpendiculaire au plan dans lequel s'étend la façade. La direction latérale Y correspond à la direction selon laquelle s'étend la façade perpendiculairement à la direction d'élévation Z.

L'homme du métier comprendra à la lecture de ce document que la direction Z et la direction Y peuvent être interverties, de sorte que la direction Z corresponde à la direction latérale et que la direction Y corresponde à la direction d'élévation.

L'homme du métier comprendra par ailleurs que les axes de la base orthonormée directe (X, Y, Z) sont orientés selon une direction quelconque, la direction Z définissant la hauteur du module de façade étant par exemple inclinée par rapport à la direction verticale du bâtiment. Dans un mode de réalisation particulier, l'axe Z est par exemple perpendiculaire à la direction verticale du bâtiment.

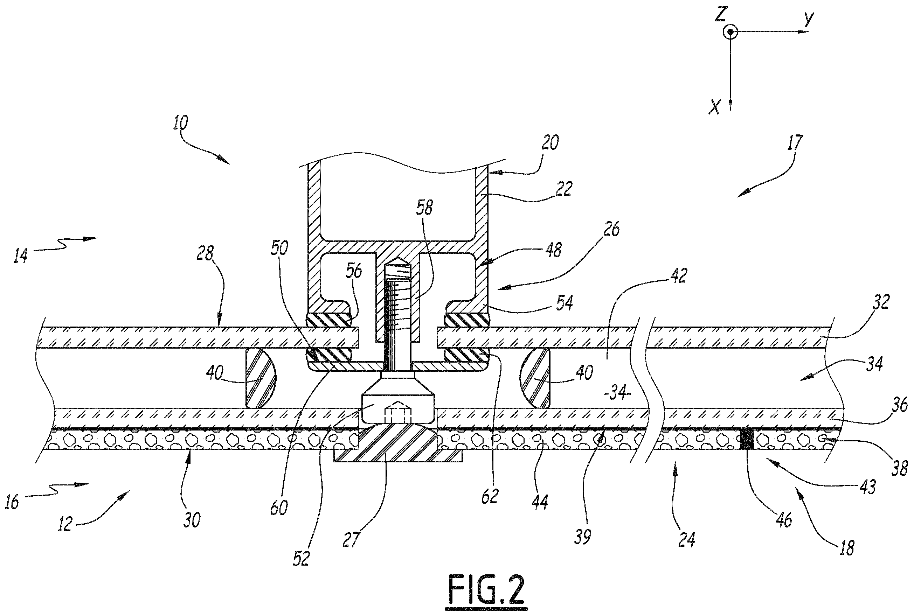

En référence à la figure 2, un bâtiment 10 comporte au moins une façade 12. Le bâtiment 10 est par exemple un immeuble d'habitation ou un immeuble de bureau.

La façade 12 est destinée à séparer au moins en partie un intérieur 14 d'un extérieur 16 d'un volume 17 de bâtiment. Le volume de bâtiment 17 est par exemple une ou des pièce(s) du bâtiment 10, l'intérieur 14 étant alors l'intérieur de la ou des pièce(s) et l'extérieur 16 étant alors l'extérieur de la ou des pièce(s). L'extérieur 16 est de préférence l'extérieur du bâtiment 10.

La façade 12 comporte au moins un module de façade 18 et une structure 20 de bâtiment.

La structure de bâtiment 20 comprend par exemple un ensemble de poutres 22 s'étendant selon la direction d'élévation Z et selon la direction transversale Y. La structure de bâtiment 20 est par exemple fixée à une fondation (non représentée) du bâtiment 10.

Chaque poutre 22 est par exemple un profilé en aluminium extrudé ou tout autre matériau de construction.

Selon un mode de réalisation non représenté, la structure de bâtiment comporte au moins organe d'articulation, les poutres 22 de la structure de bâtiment étant mobiles autour du ou des organes d'articulation. Les poutres 22 sont par exemple configurées pour être mobiles en rotation autour d'un axe parallèle à la direction d'élévation Z ou à la direction latérale Y sur un angle compris entre 0° et 90°, de préférence entre 0° et 45° par rapport au plan Y, Z.

Le module de façade 18 est solidaire de la structure de bâtiment 20 et en particulier des poutres 22.

Le module de façade 18 est destiné à séparer une partie de l'intérieur 14 de l'extérieur 16 du volume de bâtiment 17.

Le module de façade 18 comprend au moins une plaque de séparation 24 et un organe de fixation 26 de la plaque de séparation 24. Dans la variante représentée sur la figure 2, le module façade 18 comprend deux plaques de séparation 24 et un organe de fixation 26.

Le module de façade 18 comprend par exemple un joint principal 27.

La plaque de séparation 24 est solidarisée à au moins un organe de fixation 26 et avantageusement à deux organes de fixation 26 s'étendant de part et d'autre de la plaque de séparation 24.

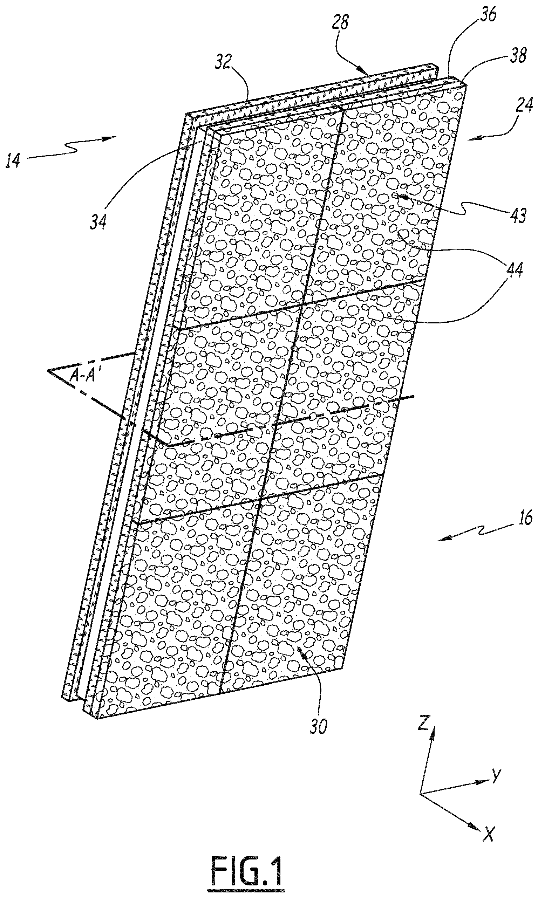

La plaque de séparation 24 est, selon la variante présentée en figure 1, sensiblement rectangulaire et s'étend dans le plan Y-Z. La superficie de la plaque de séparation 24, prise dans selon le plan Y-Z, est de préférence supérieure à 1.00 m². La hauteur la plaque de plaque de séparation 24, prise selon la direction d'élévation Z est par exemple comprise entre 1 m et 10 m, de préférence entre 2 m et 6 m. La largeur de la plaque de séparation 24, prise selon la direction latérale Y est par exemple comprise entre 0.5 m et 3 m, de préférence entre 1 m et 2 m. En variante, la plaque de séparation 24 est de forme quelconque. La longueur correspond alors à la dimension la plus élevée de la plaque de séparation 24 et la largeur correspond alors à la dimension la plus faible de la plaque de séparation 24 prise perpendiculairement à la direction traversante X.

La plaque de séparation 24 comprend une face intérieure 28, destinée à s'étendre en regard de l'intérieur 14, et une face extérieure 30, destinée à s'étendre en regard de l'extérieur 16, la face intérieure 28 étant opposée à la face extérieure 30 selon la direction traversante X.

La plaque de séparation 24 comprend une couche vitrée intérieure 32, une couche d'isolation 34 et une couche rocheuse 38. La plaque de séparation comprend en outre une couche vitrée intermédiaire 36. Dans ce mode de réalisation, la couche vitrée intérieure 32, la couche d'isolation 34, la couche vitrée intermédiaire 36 et la couche rocheuse 38 s'étendent entre la face intérieure 28 et la face extérieure 30 et sont chacune de préférence de même largeur selon la direction latérale Y et de même hauteur selon la direction d'élévation Z que la plaque de séparation 24.

La plaque de séparation 24 comprend un agent de fixation 39. L'agent de fixation est par exemple une colle ou une résine.

En référence à la figure 2, la couche vitrée intérieure 32 forme la face intérieure 28. La couche vitrée intérieure 32 est par exemple formée par une vitre en verre monolithique. Dans une variante non représentée, la couche vitrée intérieure est formée par une pluralité de vitres en verre monolithiques empilées selon la direction traversante X et par exemple séparées par des couches de polymères, de sorte à former une couche vitrée intérieur en verre feuilleté.

La couche d'isolation 34 s'étend entre la couche vitrée intérieure 32 et la couche vitrée intermédiaire 36. La couche d'isolation 34 comprend une entretoise 40, connectant la couche vitrée intérieure 32 et la couche vitrée intermédiaire 36, l'entretoise 40 s'étendant sensiblement en périphérie de la couche d'isolation 34.

L'entretoise 40 forme, en coopération avec la couche vitrée intérieure 32 et la couche vitrée intermédiaire 36, un volume d'isolation 42 (non représenté) isolé s'étendant entre la couche vitrée intérieure 32, la couche vitrée intermédiaire 36 et un contour formé par l'entretoise 40.

Le volume d'isolation 42 comprend par exemple un vide d'air ou un gaz noble tel de l'argon, du krypton ou du xénon.

La couche vitrée intermédiaire 36 est par exemple formée par une vitre en verre monolithique. Dans une variante non représentée, la couche vitrée intermédiaire 36 est formée par une pluralité de vitres en verres monolithiques empilées selon la direction traversante X et par exemple séparées par des couches de polymères, de sorte à forme une couche vitrée intermédiaire 36 en verre feuilleté.

La couche vitrée intérieure 32 et la couche vitrée intermédiaire 36 sont solidaires et sont fixées l'une à l'autre par l'intermédiaire de l'entretoise 40.

La couche rocheuse 38 s'étend sur la couche vitrée intermédiaire 36, du côté opposé à la couche d'isolation 34.

La couche rocheuse 38 forme la face extérieure 30 de la plaque de séparation.

Dans la variante préférée de la figure 2, la couche rocheuse forme la face extérieure 30 de la plaque de séparation 24 et s'étend sur la couche vitrée intermédiaire 36.

Dans une variante non illustrée et hors de l'invention, la couche rocheuse 38 ne forme pas la face extérieure 30 de la plaque de séparation 24 et s'étend sur la couche vitrée intérieure 32, en particulier sur la face de la couche vitrée intérieure 32 opposée à la face intérieure 28. En particulier, la couche rocheuse 38 s'étend alors entre la couche vitrée intérieure 32 et la couche vitrée intermédiaire 36.

L'épaisseur de la couche rocheuse 38, prise selon la direction traversante X, est par exemple comprise entre 3 mm et 12 mm, et de préférence comprise entre 3 mm et 5 mm.

La couche rocheuse 38 est fixée à la couche vitrée intermédiaire 36 par l'agent de fixation 39.

Des exemples d'agent de fixation 39 comprennent les matériaux thermoplastiques usuels pour la formation de feuilletés tels que le PVB (Polybutyral de Vinyle), l'EVA (Ethylène Vinyle Acétate), le PU (Polyuréthane), les ionomères, les polymères de cyclo-oléfines ou analogues. Ces matériaux sont appliqués sous forme de feuilles intercalaires thermoplastiques, qui, suite à un procédé de lamination, permettent la liaison de la couche rocheuse 38 à la couche vitrée intermédiaire 36. Le procédé de lamination comprend entre autres modalités, l'application d'une pression comprise entre 1 et 13 bars et la mise à température entre 100°C et 170°C, la température étant typiquement fonction du type de matériau thermoplastique. Ce type de procédé de lamination est typiquement connu de l'homme du métier, et ne fait pas l'objet de la présente invention.

La couche rocheuse 38 est de préférence formée par un groupement de morceaux de roche 43. Le groupement de morceaux de roche 43 formant la couche rocheuse comprend une pluralité de morceaux de roche 44 et un agent liant 46 connectant les morceaux de roche 44 entre eux.

La couche rocheuse comporte par exemple entre un et dix morceaux de roche, et de préférence entre un et six morceaux de roche.

L'agent liant 46 est par exemple une colle ou une résine. L'agent liant 46 fixe par exemple les morceaux de roche 44 entre eux. L'agent liant 46 constitue par exemple l'agent de fixation 39 et fixe alors les morceaux de roche 44 à la couche vitrée intermédiaire 36, et entre eux.

Chaque morceau de roche 44 est par exemple une tranche de roche d'épaisseur comprise entre 2 mm et 12 mm, et de préférence comprise entre 3 mm et 5 mm. L'ensemble morceaux de roche 44 de la couche rocheuse 38 sont par exemple de la même épaisseur, de sorte que l'épaisseur de chaque morceau de roche 44 soit égal à l'épaisseur de la couche rocheuse 38.

Chaque morceau de roche 44 est par exemple une tranche de roche de dimension d'au moins 30 cm de côté. Dans certaines configurations, des morceaux de roche peuvent avoir une dimension de côté d'au moins 85 cm, ou d'au moins 1,25 m ou d'au moins 1,55 m, ou d'au moins 2,05 m, selon le matériau considéré. Les morceaux de roche ont une dimension de côté d'au plus 3,55 m et au grand maximum de 6,05 m.

Les morceaux de roche 44 sont formés d'une roche opaque. En variante, les morceaux de roche 44 sont formés d'une roche translucide.

Les morceaux de roche 44 sont par exemple formés à partir d'une roche choisie dans la liste comprenant : marbre, granit, quartz, calcaire. Les morceaux de roche 44 sont par exemple formés à partir d'une roche choisie parmi tout type de roche ornementale.

Les morceaux de roche 44 sont notamment formés à partir de calcaire dit « Saint Clair », de granit dit « Bethel white », de granit dit « Noir Saint Henry », de calcaire dit « Branco do mar », de calcaire dit « Pierre de Lens » ou de marbre dit « Estremoz ».

Les morceaux de roche 44 sont choisis en fonction des caractéristiques techniques ou de l'aspect de façade 12 désiré.

L'ensemble des morceaux de roche 44 de la couche rocheuse sont de préférence formés à partir d'une même roche. En particulier, les morceaux de roche 44 sont arrangés dans la couche rocheuse 38 de sorte à minimiser les discontinuités visuelles entre chacun des morceaux de roche 44. Ainsi, deux morceaux de roches 44 adjacents de la couche rocheuse 38 ont des motifs similaires, notamment à proximité de l'interface entre les deux morceaux de roche adjacents 44. On entend par exemple par motif de la roche la disposition de veines dans la roche, les veines d'un morceau de roche 44 étant par exemple arrangés pour être dans la continuité des veines d'un morceau de roche 44 lui étant adjacent.

En variante, les morceaux de roche 44 de la couche rocheuse sont formés à partir de roches différentes. Cette variante possède l'avantage de permettre des décors variés, en fonction des types de roche utilisés, de surface soit homogène ou de motifs, tels que retrouvés dans la marqueterie.

Les morceaux de roche 44 ont une masse volumique avantageusement comprise entre 2000 et 3000 kg/m³.

Les morceaux de roche 44 sont adaptés à résister à un environnement extérieur. Les morceaux de roche 44 ont par exemple une faible gélivité.

L'organe de fixation 26 comprend une base 48, un clameau 50 et un moyen de blocage 52. L'organe de fixation comprend de préférence une pluralité de clameaux 50 et de moyens de blocage 52.

L'organe de fixation 26 est adapté pour fixer la au moins une plaque de séparation 24 du module de façade 18 à la structure du bâtiment 20.

Dans l'exemple de la figure 2, un même organe de fixation 26 est adapté pour fixer deux plaques de séparation 24 à la structure du bâtiment 20, l'organe de fixation s'étendant entre les deux plaques de séparation 24.

La base 48 comprend de préférence un tronçon allongé 54 et au moins un joint intérieur 56. Dans la variante présentée en figure 2, la base comprend deux joints intérieurs 56.

La base 48 est de préférence fixée à la structure de bâtiment 20.

Le tronçon allongé 54 est par exemple allongé selon une longueur orientée selon la direction d'élévation Z ou la direction latérale Y. Le tronçon allongé est par exemple un tronçon extrudé en aluminium. Selon une variante particulière, le tronçon allongé 54 est connecté à la poutre 22 de sorte que le tronçon allongé 54 et la poutre 22 forme un ensemble monolithique.

Le tronçon allongé 54 comprend au moins une portion d'engagement 58 du moyen de blocage 52. Dans l'exemple de la figure 2, la portion d'engagement 58 du moyen de blocage 52 est un trou taraudé.

Chaque joint intérieur 56, s'étend entre la face intérieure 28 de la plaque de séparation 24 et le tronçon allongé 54. Chaque joint intérieur 56 est de préférence serré entre la face intérieure 28 et le tronçon allongé 54. Chaque joint intérieur 56 s'étend de préférence selon toute la longueur du tronçon allongé 54.

Le clameau 50 comprend une barre de serrage 60 et de préférence un joint intermédiaire 62. Dans la variante de la figure 2, le clameau 50 comprend 2 joints intermédiaires.

Le clameau 50 est mobile entre une position libre et une position de blocage.

Le clameau 50 est adapté pour, lorsqu'il est dans la position de blocage, serrer la couche vitrée intérieure 28 contre la base 48. Le clameau 50 est en particulier adapté pour, lorsqu'il est dans sa position de blocage, maintenir la plaque de séparation 24 sur la structure de bâtiment 20. Le clameau 50 est par exemple adapté pour, lorsqu'il est dans sa position de blocage, serrer le joint intérieur 56 et le joint intermédiaire 62 de part et d'autre de la couche vitrée intérieure 32.

Dans la variante de la figure 2, le clameau 50 est adapté pour, lorsqu'il est dans la position de blocage, serrer simultanément la couche vitrée intérieure 28 de deux plaques de séparation 24 contre la base 48 et pour maintenir deux plaques de séparation 24 sur la structure de bâtiment 20.

Le clameau 50 est adapté pour, lorsqu'il est dans la position libre, être mobile indépendamment de la base 48.

Le clameau 50 comporte une portion de passage du moyen de blocage 52, adaptée pour accueillir le moyen de blocage 52.

Le moyen de blocage 52 connecte la base 48 au clameau 50. Le moyen de blocage 52 est adapté pour déplacer le clameau 50 entre la position libre et la position de blocage.

Le moyen de blocage 52 est adapté pour maintenir le clameau 50 en position de blocage et ainsi maintenir la plaque de séparation 24 sur la structure de bâtiment 20.

Le clameau 50 peut être déplacé entre sa position libre et sa position de blocage par déplacement de la barre de serrage 60 par rapport à la base 48. Le clameau 50 est déplacé de sa position libre à sa position de blocage par déplacement de la barre de serrage 60 vers la base 48 et le clameau 50 est déplacé de sa position de blocage à sa position libre par déplacement de la barre de serrage 60 à l'écart de la base 48.

Selon l'invention, la barre de serrage 60 est allongée selon une direction d'élongation et est mobile en rotation autour d'un axe d'élongation du moyen de blocage 52. La direction d'élongation de la barre de serrage 60 s'étend de préférence parallèlement à un bord de la plaque de séparation 24 lorsque le clameau 50 est dans sa position libre. La direction d'élongation de la barre de serrage 60 s'étend par exemple dans l'espace formé entre deux plaques de séparation 24 adjacentes lorsque le clameau est dans sa position libre. La barre de serrage 60 s'étend de préférence perpendiculairement à un bord de la plaque de séparation 24 lorsque le clameau 50 est de sa position de blocage, de sorte à ce que la plaque de séparation puisse être disposée dans une position installée avant la mise en place du clameau dans sa position de blocage. La barre de serrage 60 s'étend par exemple au moins partiellement entre la couche vitrée intérieure 32 et la couche vitrée intermédiaire 36 d'au moins une plaque de séparation 24 lorsque le clameau est dans sa position de blocage.

Le clameau 50 est déplacé entre sa position libre et sa position de blocage par rotation de la barre de serrage 60, par exemple d'un quart de tour, par rapport à la base 48, combinée à un rapprochement ou un éloignement de la barre de serrage 60 par rapport à la base 48.

Comme illustré sur la figure 2, le joint principal 27 s'étend par exemple, lorsque le clameau 50 est dans la position de blocage, entre la couche rocheuse 38 de deux plaques de séparation 24. Le joint principal s'étend par exemple à l'écart du moyen de blocage 52 ou, comme illustré en figure 2 est en contact avec le moyen de blocage 52.

Le joint principal 27 est en particulier adapté pour isoler la base 48, le clameau 50 et le moyen de blocage 52 de l'extérieur 16.

Le montage d'un module de façade 18 selon l'invention va maintenant être décrit.

Une couche vitrée intérieure 32, une couche d'isolation 34 et une couche vitrée intermédiaire 36 sont fournies afin de former un assemblage tel une plaque de double vitrage.

Un ensemble de morceaux de roche 44 sont fournis à la suite d'une sélection selon leur apparence. La sélection des morceaux de roche 44 vise par exemple à assurer une homogénéité des morceaux de roche 44 sélectionnées et/ou l'atteinte d'un aspect désiré de l'ensemble des morceaux de roche 44.

Les morceaux de roche 44 sont par exemple taillés afin d'obtenir des morceaux de roche 44 dont les dimensions sont adaptées à la formation de la couche rocheuse 38.

Les morceaux de roche 44 sont par la suite arrangés et leur position relative référencée afin d'obtenir un arrangement harmonieux de morceaux de roche 44. Les morceaux de roche 44 sont de préférence choisis et arrangés pour minimiser les interfaces entre les morceaux de roche 44.

Chaque morceau de roche 44 est par la suite solidarisé sur la couche vitrée intermédiaire 36 par l'intermédiaire de l'agent de fixation 39, par exemple à la suite de l'application de l'agent de fixation 39 sur le morceau de roche 44 et/ou sur la couche vitrée intermédiaire 36, formant ainsi la plaque de séparation 24. Les morceaux de roche 44 sont en particulier fixés sur la couche vitrée intermédiaire 36 en accord avec leur position relative précédemment référencée. Les morceaux de roche 44 peuvent être fixés sur la couche vitrée intermédiaire 36 via l'agent de fixation 39, par un procédé de lamination.

Lors de la solidarisation des morceaux de roche 44 sur la couche vitrée intermédiaire 36, l'agent de fixation 39 comble l'interface entre les morceaux de roche 44. L'agent de fixation 39 forme alors l'agent liant 46. Les morceaux de roche 44 étant choisis pour minimiser les interfaces entre les morceaux de roches 44, les interfaces sont avantageusement non-visibles d'un utilisateur observant le module de façade 18 dans son entièreté.

Les organes de fixation 26 sont par la suite, antérieurement ou simultanément solidarisés à la structure de bâtiment 20.

La plaque de séparation 24 ainsi formée est par la suite solidarisée à l'organe de fixation 26 et de préférence à deux organes de fixation 26, chacun des organes de fixation 26 étant montés sur la structure de bâtiment 20.

Le moyen de blocage 52 de chaque organe de fixation est alors par exemple activé. Lors de l'activation du moyen de blocage 52, le moyen de blocage déplace le clameau 50 de la position libre vers la position de blocage afin que le clameau 50 serre la couche vitrée intérieure 32 contre la base 48. Le moyen de blocage 52 serre la couche vitrée intérieure 32 d'une ou de deux plaques séparation 24 différentes pour fixer une ou deux plaques de séparation 24 à la structure de bâtiment 20

En variante, la plaque de séparation 24 est solidarisé à l'organe de fixation 26 avant que l'organe de fixation ne soit fixé à la structure de bâtiment 20.

Dans la variante ou deux plaques de séparation 24 sont fixées sur la structure de bâtiment 20 par un unique organe de fixation 26, le joint principal 27 est, suite à la fixation des deux plaques de séparation 24 sur la structure du bâtiment 20, installé entre les deux plaques de séparation 24, le joint principal étant par exemple collé entre les plaques de séparation 24.

Le module de façade 18 tel que précédemment décrit est particulièrement avantageux puisqu'il permet d'offrir un choix élargi d'esthétiques pour des façades 12, en permettant notamment la réalisation façades rocheuses adaptées à former des façades dites en « mur rideau ».

L'utilisation d'un groupement de morceaux de roche 43 est particulièrement avantageuse puisqu'elle permet de réaliser une couche rocheuse 38 de grande dimension, particulièrement esthétique, adaptée à un montage rapide sur une structure légère. Le groupement de morceaux de roche 43 peut en effet être installé sur une structure légère aussi facilement qu'une plaque vitrée standard. Un tel groupement de morceaux de roche 43 est par ailleurs particulièrement avantageux pour améliorer l'esthétique en limitant les surfaces de joints visibles et, par ailleurs en limitant les dégâts dus à la corrosion des systèmes de joints.

La solution proposée permet d'intégrer une façade de roche assimilée à une façade de verre, sans distinction du système de fixation. Cette façon de procéder permet la pose et le montage d'une façade d'apparence homogène entre les composantes transparentes vitrées et les composantes rocheuses, sans démarcation notable des interfaces de contact et des systèmes de fixation entre ces composantes. Ce procédé permet le montage d'une façade rocheuse en une façade structurelle.

L'utilisation d'un groupement de morceaux de roche 43 est par ailleurs particulièrement économique puisqu'elle permet de réaliser des façades 12 en pierre sans avoir à recourir à des blocs de pierre massifs rares, couteux, lourds et peu maniables.

Le groupement de morceaux de roche 43 permet par ailleurs d'utiliser des chutes de roche, ce qui est particulièrement économique.

Les dimensions de la couche rocheuse optimisent le poids afin d'améliorer la robustesse du module de façade sans compromettre son esthétique.

Le type de roche choisi permet un rendu esthétique tout en offrant une grande robustesse du module de façade.

Une plaque 24 de superficie élevée est avantageuse puisqu'elle assure une nombre réduit de points d'attache au bâtiment, simplifiant la structure d'une façade comprenant une telle plaque, tout en ayant un aspect esthétique particulièrement avantageux.

La présence de la couche d'isolation 34 assure une isolation élevée de la façade 12.

Cette couche d'isolation 34 permet également avantageusement la fixation du clameau 50.

Selon un premier mode de réalisation alternatif non représenté et non revendiqué, le module de façade 18 diffère du mode de réalisation précédemment présenté uniquement par ce qui suit. Les éléments analogues portent les mêmes références.

Selon une première variante de ce mode de réalisation alternatif, l'organe de fixation 26 est une colle connectant la base 48 à la couche vitrée intérieure 32. La façade 12 est alors par exemple une façade de type Vitrage Extérieur Collé, ce type de façade étant aussi connu sous le nom de façade VEC.

Selon une deuxième variante de ce mode de réalisation non revendiqué, l'organe de fixation 26 comporte un organe de serrage extérieur, s'étendant sur un bord de la face extérieure 30 du module de façade 18 et un organe de serrage intérieur, s'étendant sur un bord de la face intérieure 28 du module de façade 18. Le module de façade 18 est alors serré entre l'organe de serrage intérieur et l'organe de serrage extérieur. La façade 12 est alors par exemple une façade de type Vitrage Extérieur Parclosé, ce type de façade étant aussi connu sous le nom de façade VEP.

Selon un deuxième mode de réalisation non représenté , la plaque de séparation comprend une pluralité de couches vitrées intermédiaire 36 et une pluralité de couches d'isolation 34, la couche rocheuse 38 s'étendant sur la couche vitrée intermédiaire la plus proche de l'extérieur 16.

Comme illustré en figure 2, l'organe de fixation 26 est de préférence adapté pour fixer la plaque de séparation à la structure de bâtiment 20 en maintenant exclusivement la couche vitrée intérieure 32.

En particulier, lorsque le clameau 50 est dans sa position de blocage, le clameau 50 serre directement la couche vitrée intérieure 32 contre la base 48. Le clameau 50 est alors au moins partiellement disposé entre la couche vitrée intérieure 32 et la couche vitrée intermédiaire 36. Cette disposition de feuilles vitrées 32, 36 permet l'installation d'un système à vitrage multiple, qui améliore les propriétés thermiques du module de façade et qui présente en plus un aspect esthétique particulièrement satisfaisant.

Dans la variante selon laquelle le module de façade 18 comprend au moins deux plaques de séparation 24 fixées à la structure de bâtiment 20 par un seul organe de fixation 26, le clameau 50 est par exemple disposé entre les couches vitrées intérieures 32 et les couches vitrées intermédiaires 36 des au moins deux plaques de séparation 24. Comme illustré en figure 2, le clameau 50 s'étend entre les entretoises 40 des au moins deux plaques de séparation.

Les entretoises 40 s'étendant en périphérie de la couche d'isolation 34 sont en retrait de bords périphériques de la couche vitrée intérieure 32 et/ou de la couche vitrée intermédiaire 36. Les entretoises 40 délimitent d'une part le volume d'isolation 40 et d'autre part un espace périphérique de la plaque de séparation 24, destiné à accueillir le clameau 50. Dans l'exemple de la figure 2, le clameau 50 s'étend dans l'espace périphérique des deux plaques de séparation 24 fixées par l'organe de fixation 26.

La totalité de l'organe de fixation 26 et la totalité de la couche vitrée intérieure 32 s'étendent de préférence d'un même côté de la couche rocheuse 38. L'esthétique du module de façade 18, vu du côté de la couche rocheuse 38 opposé au côté de la couche rocheuse à partir duquel s'étend l'organe de fixation 26, est particulièrement avantageuse, la couche rocheuse 38 n'étant recouverte par aucune portion de l'organe de fixation 26.

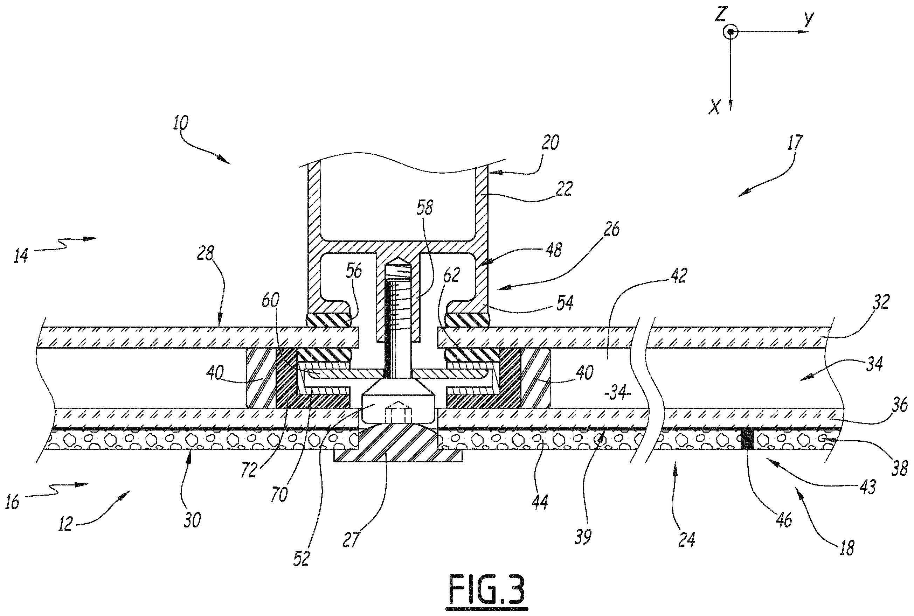

Selon un troisième mode de réalisation alternatif présenté en figure 3, compatible avec le mode de réalisation de la figure 2, le module de façade 18 diffère du mode de réalisation précédemment présenté uniquement par ce qui suit. Les éléments analogues portent les mêmes références.

La plaque de séparation 24 comprend un profilé d'accueil 70 et un joint extérieur 72.

Comme représenté sur la figure 3, le profilé d'accueil 70 s'étend entre la couche vitrée intérieure 32 et la couche vitrée intermédiaire 36.

Le profilé d'accueil 70 est par exemple formé en aluminium.

Le profilé d'accueil 70 est par exemple un profilé présentant une section en forme de U. Le profilé d'accueil 70 forme une cavité ouverte vers le bord de la plaque de séparation 24. La barre de serrage 60 est par exemple au moins partiellement introduite dans la cavité formée par le profilé d'accueil 70 de façon à s'étendre au moins partiellement dans la cavité formée par le profilé d'accueil 70 lorsque le clameau 50 est en position de blocage.

Le joint intermédiaire 62 s'étend entre le profilé d'accueil 70 et la couche vitrée intérieure 32 et est de préférence serré entre le profilé d'accueil 70 et la couche vitrée intérieure 32 lorsque le clameau 50 est dans sa position de blocage.

Le joint extérieur 72 s'étend entre la couche vitrée intérieure 32 et la couche vitrée intermédiaire 36.

Le joint extérieur 72 s'étend entre le profilé d'accueil 70 et la couche vitrée intermédiaire 36. Le joint extérieur 72 connecte de préférence le profilé d'accueil 70 et la couche vitrée intermédiaire 36.

Le joint extérieur 72 s'étend par exemple entre le profilé d'accueil 70 et l'entretoise 40. Le joint extérieur 72 connecte par exemple le profilé d'accueil 70 et l'entretoise 40.

Comme illustré en figure 3, le joint extérieur 72 a par exemple une forme de joint profilé présentant une section en forme de L, une branche du L s'étendant entre le profilé d'accueil 70 et la couche vitrée intermédiaire 36 et l'autre branche du L s'étendant entre le profilé d'accueil 70 et l'entretoise 40.

Dans un mode de réalisation particulier non représenté, le joint extérieur 72 est venu de matière avec le joint intermédiaire 62. Le joint extérieur 72 et le joint intermédiaire 62 forment alors ensemble un joint en U, définissant par exemple une cavité dans laquelle est disposé le profilé d'accueil 70.

Ce mode de réalisation permet une meilleure répartition de la charge de serrage du clameau 50 sur la couche vitrée intérieure 32, améliorant la robustesse du module de façade 18.

## Revendications

1. Module de façade (18), destiné à séparer un intérieur (14) d'un extérieur (16) d'un volume de bâtiment (17), comprenant :
- au moins une plaque de séparation (24), comprenant une face intérieure (28) et une face extérieure (30), la plaque de séparation comprenant une couche vitrée intérieure (32) formant la face intérieure (28), et
- un organe de fixation (26) de la plaque de séparation (24) adapté pour fixer la plaque de séparation (24) à une structure de bâtiment (20),
la plaque de séparation (24) comprenant au moins une couche rocheuse (38) formant la face extérieure (30) de la plaque de séparation (24),
la plaque de séparation (24) comprenant une couche vitrée intermédiaire (36), la couche vitrée intermédiaire (36) s'étendant entre la couche vitrée intérieure (32) et la couche rocheuse (38), la plaque de séparation (24) comprenant un agent de fixation (39) fixant la couche vitrée intermédiaire (36) et la couche rocheuse (38),
l'organe de fixation (26) comprenant :
- une base (48), destinée à être solidarisée à la structure de bâtiment (20);
- un clameau (50); et
- un moyen de blocage (52), connectant la base (48) au clameau (50) et adapté pour déplacer le clameau (50) entre une position libre et une position de blocage, dans laquelle le clameau (50) serre la couche vitrée intérieure (32) contre la base (48), l'organe de fixation (26) étant adapté pour, lorsque le clameau (50) est en position de blocage, maintenir la plaque de séparation (24) sur la structure de bâtiment (20),
**caractérisé en ce que** le clameau (50) est au moins partiellement disposé entre la couche vitrée intérieure (32) et la couche vitrée intermédiaire (36) lorsque le clameau (50) est dans sa position de blocage,
le clameau (50) comprenant une barre de serrage (60) allongée selon une direction d'élongation et mobile autour d'un axe d'élongation du moyen de blocage (52), de sorte que le clameau (50) peut être déplacé entre la position libre et la position de blocage par rotation de la barre de serrage (60) par rapport à la base (48) combinée à un rapprochement ou un éloignement de la barre de serrage (60) par rapport à la base (48).

2. Module de façade (18) selon la revendication 1, dans lequel la couche rocheuse (38) est formée par un groupement de morceaux de roche (43), le groupement de morceaux de roches (43) comprenant une pluralité de morceaux de roche (44) et un agent liant (46), l'agent liant (46) connectant les morceaux de roches entre eux.

3. Module de façade (18) selon la revendication 2, dans lequel la couche rocheuse (38) comporte entre un et dix morceaux de roche (44), chaque morceau de roche (44) étant une tranche de roche d'épaisseur comprise entre 3 mm et 12 mm.

4. Module de façade (18) selon la revendication 2 ou 3, dans lequel les morceaux de roche (44) du groupement de morceaux de roche (43) sont formés d'au moins une roche ornementale opaque, de préférence choisie dans la liste consistant en : marbre, granit, quartz, calcaire.

5. Module de façade (18) selon l'une quelconque des revendications précédentes, dans lequel la superficie de la plaque de séparation (24) est supérieure à 1 m².

6. Module de façade (18) selon l'une quelconque des revendications précédentes, dans lequel le clameau (50) comprend une barre de serrage (60) et dans lequel la plaque de séparation (24) comprend un profilé d'accueil (70) s'étendant entre la couche vitrée intérieure (32) et la couche vitrée intermédiaire (36), la barre de serrage (60) s'étendant au moins partiellement dans une cavité formée par le profilé d'accueil (70) lorsque le clameau (50) est dans sa position de blocage.

7. Façade de bâtiment (12) comprenant au moins un module de façade (18) selon l'une quelconque des revendications 1 à 6 et une structure de bâtiment (20), l'organe de fixation (26) fixant la plaque de séparation (24) à la structure de bâtiment (20).

8. Façade de bâtiment selon la revendication 7, dans lequel le module de façade (18) comprend au moins deux plaques de séparation (24) fixés à la structure de bâtiment (20) par un seul organe de fixation (26), l'organe de fixation (26) s'étendant entre les deux plaques de séparation (24).

## Patentansprüche

1. Fassadenmodul (18), das dazu bestimmt ist, einen Innenraum (14) von einem Außenraum (16) eines Gebäudevolumens (17) zu trennen, umfassend:
- mindestens eine Trennplatte (24), umfassend eine Innenseite (28) und eine Außenseite (30), wobei die Trennplatte umfassend eine innere Glasschicht (32), die die Innenseite (28) bildet, und
- ein Befestigungselement (26) für die Trennplatte (24), das dazu geeignet ist, die Trennplatte (24) an einer Gebäudestruktur (20) zu befestigen,
die Trennplatte (24) umfassend mindestens eine Gesteinsschicht (38), die die Außenseite (30) der Trennplatte (24) bildet,
die Trennplatte (24) umfassend eine Zwischenglasschicht (36), wobei sich die Zwischenglasschicht (36) zwischen der inneren Glasschicht (32) und der Gesteinsschicht (38) erstreckt, die Trennplatte (24) umfassend ein Befestigungsmittel (39), das die Zwischenglasschicht (36) und die Gesteinsschicht (38) befestigt,
das Befestigungselement (26) umfassend:
- eine Basis (48), die dazu bestimmt ist, fest mit der Gebäudestruktur (20) verbunden zu sein;
- einen Kloben (50); und
- eine Verriegelungseinrichtung (52), die die Basis (48) mit dem Kloben (50) verbindet und angepasst ist, um den Kloben (50) zwischen einer freien Position und einer Verriegelungsposition, in der der Kloben (50) die innere Glasschicht (32) gegen die Basis (48) klemmt, zu bewegen, wobei das Befestigungselement (26) angepasst ist, um, wenn der Kloben (50) in der Verriegelungsposition ist, die Trennplatte (24) an der Gebäudestruktur (20) zu halten,
**dadurch gekennzeichnet, dass** der Kloben (50) zumindest teilweise zwischen der inneren Glasschicht (32) und der mittleren Glasschicht (36) angeordnet ist, wenn der Kloben (50) in seiner Arretierposition ist,
der Kloben (50) umfassend eine Klemmstange (60), die sich in einer Längsrichtung erstreckt und um eine Längsachse der Verriegelungseinrichtung (52) bewegbar ist, sodass der Kloben (50) zwischen der freien Position und der Verriegelungsposition durch Drehen der Klemmstange (60) in Bezug auf die Basis (48) in Kombination mit einem Annähern oder Entfernen der Klemmstange (60) in Bezug auf die Basis (48) bewegt werden kann.

2. Fassadenmodul (18) nach Anspruch 1, wobei die Gesteinsschicht (38) durch eine Anordnung von Gesteinsstücken (43) gebildet ist, die Anordnung von Gesteinsstücken (43) umfassend eine Vielzahl von Gesteinsstücken (44) und ein Bindemittel (46), wobei das Bindemittel (46) die Gesteinsstücke miteinander verbindet.

3. Fassadenmodul (18) nach Anspruch 2, wobei die Gesteinsschicht (38) zwischen einem und zehn Gesteinsstücken (44) umfasst, wobei jedes Gesteinsstück (44) eine Gesteinsscheibe mit einer Stärke zwischen 3 mm und 12 mm ist.

4. Fassadenmodul (18) nach Anspruch 2 oder 3, wobei die Gesteinsstücke (44) der Gruppierung von Gesteinsstücken (43) aus mindestens einem opaken Ornamentgestein gebildet sind, das vorzugsweise ausgewählt ist aus der Liste bestehend aus: Marmor, Granit, Quarz, Kalkstein.

5. Fassadenmodul (18) nach einem der vorhergehenden Ansprüche, wobei die Fläche der Trennplatte (24) größer als 1 m² ist.

6. Fassadenmodul (18) nach einem der vorherigen Ansprüche, wobei der Kloben (50) eine Klemmleiste (60) umfasst und wobei die Trennplatte (24) ein Aufnahmeprofil (70) umfasst, das sich zwischen der inneren Glasschicht (32) und der mittleren Glasschicht (36) erstreckt, wobei sich die Klemmleiste (60) zumindest teilweise in einen durch das Aufnahmeprofil (70) gebildeten Hohlraum erstreckt, wenn der Kloben (50) in seiner Verriegelungsposition ist.

7. Gebäudefassade (12), umfassend mindestens ein Fassadenmodul (18) nach einem der Ansprüche 1 bis 6 und eine Gebäudestruktur (20), wobei das Befestigungselement (26) die Trennplatte (24) an der Gebäudestruktur (20) befestigt.

8. Gebäudefassade nach Anspruch 7, wobei das Fassadenmodul (18) mindestens zwei Trennplatten (24) umfasst, die durch ein einzelnes Befestigungselement (26) an der Gebäudestruktur (20) befestigt sind, wobei sich das Befestigungselement (26) zwischen den zwei Trennplatten (24) erstreckt.

## Claims

1. A facade module (18) for separating an interior (14) from an exterior (16) of a building volume (17), comprising:
- at least one partition plate (24), comprising an inner face (28) and an outer face (30), the partition plate comprising an inner glazed layer (32) forming the inner face (28), and
- a fastening element (26) of the partition plate (24) suitable for fastening the partition plate (24) to a building structure (20),
the partition plate (24) comprising at least one stone layer (38) forming the outer face (30) of the partition plate (24),
the partition plate (24) comprising an intermediate glazed layer (36), the intermediate glazed layer (36) extending between the inner glazed layer (32) and the stone layer (38), the partition plate (24) comprising a bonding agent (39) bonding the intermediate glazed layer (36) and the stone layer (38),
the fastening element (26) comprising:
- a base (48), intended for being rigidly attached to the building structure (20);
- a cramp iron (50); and
- locking means (52), connecting the base (48) to the cramp iron (50) and suitable for moving the cramp iron (50) between a free position and a locking position, wherein the cramp iron (50) presses the inner glazed layer (32) against the base (48), the fastening element (26) being suitable for holding the partition plate (24) onto the building structure (20) when the cramp iron (50) is in the locking position,
**characterized in that** the cramp iron (50) is at least partially arranged between the inner glazed layer (32) and the intermediate glazed layer (36) when the cramp iron (50) is in the locking position thereof,
the cramp iron (50) comprising a tightening bar (60) elongated in an elongation direction and movable around an elongation axis of the locking means (52), so that the cramp iron (50) can be moved between the free position and the locking position by rotating the tightening bar (60) with respect to the base (48) combined with a movement of the tightening bar (60) toward or away from the base (48).

2. The facade module (18) according to claim 1, wherein the stone layer (38) consists of a group of pieces of stone (43), the group of pieces of stone (43) comprising a plurality of pieces of stone (44) and a binding agent (46), the binding agent (46) connecting the pieces of stone to each other.

3. The facade module (18) according to claim 2, wherein the stone layer (38) comprises between one and ten pieces of stone (44), each piece of stone (44) being a slice of stone with a thickness of between 3 mm and 12 mm.

4. The facade module (18) according to claim 2 or 3, wherein the pieces of stone (44) of the stone group (43) of pieces of stone are made of at least one opaque ornamental stone, preferentially selected from the list consisting of: marble, granite, quartz, limestone.

5. The facade module (18) according to any of the preceding claims, wherein the surface area of the partition plate (24) is greater than 1 m².

6. The facade module (18) according to any of the preceding claims, wherein the cramp iron (50) comprises a tightening bar (60) and wherein the partition plate (24) comprises a receiving profile (70) extending between the inner glazed layer (32) and the intermediate glazed layer (36), the tightening bar (60) extending at least partially into a cavity formed by the receiving profile (70) when the cramp iron (50) is in the locking position thereof.

7. A building facade (12) comprising at least one facade module (18) according to any of claims 1 to 6 and a building structure (20), the fastening element (26) fastening the partition plate (24) to the building structure (20).

8. The building facade according to claim 7, wherein the facade module (18) comprises at least two partition plates (24) fastened to the building structure (20) by a single fastening element (26), the fastening element (26) extending between the two partition plates (24).
